# EUROPÄISCHE PATENTSCHRIFT

(11) **EP 0 982 009 B1**
(45) Veröffentlichungstag und Bekanntmachung des Hinweises auf die Patenterteilung: **08.12.2004**
(21) Anmeldenummer: 99116985.5
(22) Anmeldetag: 27.08.1999
(51) Int. Cl.: A61C 13/00

(54) **Vorrichtung zur Herstellung eines Zahnersatzteils**
Device for manufacturing a dental restorative construction
Dispositif pour la fabrication d'une prothèse dentaire

(30) Priorität: 28.08.1998 DE 29815486 U
(43) Veröffentlichungstag der Anmeldung: 01.03.2000
(73) Patentinhaber: 3M ESPE AG, 82229 Seefeld (DE)
(72) Erfinder: Beuschel, Martin, 80639 München (DE); Huber, Erich, 84558 Tyrlaching (DE); Sendelbach, Erich, 82380 Peissenberg (DE); Schäfer, Olaf, 78224 Singen (DE)

(56) Entgegenhaltungen:
- EP-A- 0 807 422
- WO-A-95/30382

## Beschreibung

Zahnersatzteile, etwa Kronen, Brücken, Implantate oder dergleichen, lassen sich in der Weise herstellen, daß zunächst der präparierte Zahnstumpf als Gipsmodell mittels eines optischen oder mechanischen Scanners abgetastet und die dabei gewonnenen Daten zur Erzeugung von Fräsbahnen für die Kavität des Zahnersatzteils verwendet werden. Sodann wird eine vom Zahntechniker aus Wachs modellierte Prothese auf das Gipsmodell des Stumpfes aufgesetzt und zur Gewinnung weiterer Daten zur Fräsbahngenerierung abgetastet. Beide Datensätze ergeben in einem Koordinatensystem das zu fräsende Volumen. Alternativ kann das Zahnersatzteil bereits digitalisiert in Standardbibliotheken vorliegen und auf die jeweilige Situation angepaßt werden.

Zur Halterung von Rohlingen für die Herstellung von Zahnersatzteilen in einer Fräs- oder sonstigen Bearbeitungsmaschine ist aus WO 95/30382 eine Vorrichtung mit den im ersten Teil des Anspruchs 1 angegebenen Merkmalen bekannt. Der Zahnersatzteil-Rohling ist dort aus Kostengründen so bemessen, daß bei der Bearbeitung möglichst wenig Abfall an teurem Rohlingswerkstoff entsteht. Der generell zylindrische Rohling ist in einen ringförmigen Tragkörper eingeklebt, der sich in die jeweilige Bearbeitungsmaschine einspannen läßt und den Rohling in einem Teilbereich seiner axialen Länge umgibt.

Gemäß EP-A-0 455 854 wird ein Zahnersatzteil-Rohling aus einem Materialstab herausgearbeitet, wobei sowohl die Zahnkrone als auch ein Halterungsstumpf entstehen. Nach Abstechen der Krone wird diese mit ihrer Bohrung auf das konische Ende des Halterungsstumpfes aufgesteckt.

Der Erfindung liegt die Aufgabe zugrunde, eine Aufnahme für einen Zahnersatzteil-Rohling anzugeben, die nicht nur als Halterung in der jeweiligen Bearbeitungsmaschine dient, sondern gleichzeitig eine den Rohling schützende Primärverpackung darstellt und dessen sichere Handhabung im Zuge einer automatischen Fertigung gestattet.

Die erfindungsgemäße Lösung dieser Aufgabe ist im Anspruch 1 gekennzeichnet.

Die Tatsache, daß der Rohling den Tragkörper in keiner Richtung überragt, bedeutet einen wirksamen Schutz des Rohlingswerkstoffs gegen mechanische Einflüsse. Außerdem läßt sich der Rohling von zwei entgegengesetzten Seiten bearbeiten, was bei Zahnersatzteilen wesentlich ist. Da der Tragkörper allein die äußere Form der aus Rohling und Tragkörper gebildeten Einheit bestimmt, läßt er sich ohne Beschränkungen so gestalten, daß er unabhängig von der genauen Rohlingsform mit weiteren Einheiten gestapelt werden kann und ein automatisches Beschicken, Entnehmen und Wenden im Zuge einer automatischen Fertigung gestattet.

Die nach Anspruch 2 vorgesehene Plattenform ist für die Handhabung und Stapelung besonders günstig.

In der Weiterbildung der Erfindung nach Anspruch 3 und 4 ergibt sich eine Gestaltung des Tragkörpers, die zu hoher Steifigkeit bei geringem Materialeinsatz führt.

Die Maßnahme des Anspruchs 5 ist insofern von Vorteil, als die Gesamtabmessungen des Tragkörpers von dessen Außenbereich bestimmt werden, während der den Rohling umgebende Bereich des Tragkörpers kleiner und der Rohling daher für das Bearbeitungswerkzeug weitgehend zugänglich ist.

Da der erfindungsgemäße Tragkörper im wesentlichen unabhängig von Form und Größe des Rohlings gestaltet werden kann, bietet er auch genügend Platz zum Anbringen einer Codierung im Sinne des Anspruchs 6. In diesem Fall kann die Bearbeitungsmaschine so ausgelegt sein, daß sie anhand des am Tragkörper abgetasteten Codes automatisch den richtigen Bearbeitungsvorgang für den darin enthaltenen Rohling mit dem richtigen Werkzeug durchführt oder bei fehlender Übereinstimmung den Bearbeitungsvorgang unterdrückt.

Die Maßnahme des Anspruchs 7 hat den Vorteil, daß eine versehentliche doppelte Bearbeitung des gleichen Rohlings verhindert wird. Gleichzeitig läßt sich mit dieser Maßnahme sicherstellen, daß nur Original-Rohlinge, wie sie vom Hersteller samt Tragkörper geliefert werden, bearbeitet werden, während etwa benutzte, erneut mit Rohlingen bestückte Tragkörper abgewiesen werden.

In der Weiterbildung der Erfindung nach Anspruch 8 wird die ordnungsgemäße Lageorientierung des Tragkörpers samt Rohling in der Bearbeitungsmaschine gewährleistet.

Das Merkmal des Anspruchs 9 ist vom Standpunkt der Material- und Herstellkosten für den Tragkörper von Interesse.

Ein Ausführungsbeispiel der Erfindung wird nachstehend anhand der Zeichnung näher erläutert. Darin zeigt
- Figur 1: eine perspektivische Darstellung eines Tragkörpers für einen Zahnersatzteil-Rohling,
- Figur 2: einen Axialschnitt durch den Tragkörper nach Figur 1 mit eingesetztem Rohling, und
- Figur 3: eine schematische Darstellung des Magazins einer automatischen Bearbeitungsmaschine.

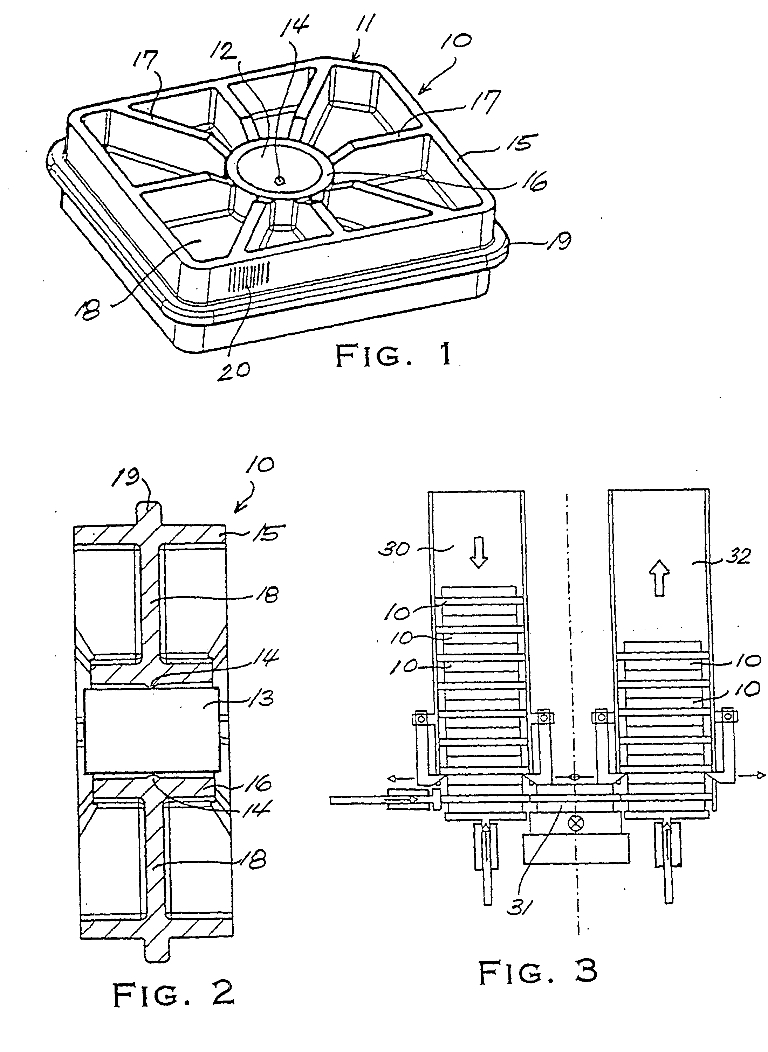

Gemäß Figur 1 und 2 ist der als Kunststoff-Spritzteil hergestellte Tragkörper **10** im wesentlichen plattenförmig mit rechteckiger Grundfläche und gegenüber deren Seiten geringeren Höhe. Ein Eckbereich **11** ist abgeschrägt, um die Orientierung des Tragkörpers **10** feststellen zu können.

Eine im wesentlichen zentrische Bohrung **12** dient zur Aufnahme eines Zahnersatzteil-Rohlings **13** (Figur 2). Der im wesentlichen zylindrische Rohling **13** wird durch drei an der Innenwand der Bohrung **12** um jeweils 120° versetzte Nasen **14** in seiner Position gehalten. Der Rohling **13** kann in die Bohrung **12** eingeklebt, eingeschraubt oder auf andere Art darin befestigt sein.

Anstelle der gezeigten einen Bohrung **12** können auch deren mehrere zur Aufnahme mehrerer Rohlinge im selben Tragkörper **10** vorgesehen sein. Ferner kann je nach der Form des Rohlings **13** auch eine eckig oder in sonstiger Weise gestaltete Aufnahmeöffnung vorhanden sein.

Der Tragkörper **10** ist von seinen beiden Stirnflächen her mit Ausnehmungen versehen, die so bemessen und angeordnet sind, daß ein Umfangsflansch **15**, ein die Bohrung **12** definierender Aufnahmezylinder **16**, acht zwischen dem Umfangsflansch **15** und dem Aufnahmezylinder **16** radial verlaufende Rippen **17** sowie eine etwa mittig zwischen den beiden Stirnflächen gelegene Zwischenwand **18** verbleiben. An dem Umfangsflansch **15** ist etwa in der Mitte der Höhe ein umlaufender Wulst **19** vorgesehen.

Wie insbesondere aus Figur 2 ersichtlich, wird die größte Dicke des plattenförmigen Tragkörpers **10** von der in Axialrichtung der Bohrung **12** gemessenen Höhe des Umfangsflansches 15 bestimmt. Dieses Maß ist größer als die axiale Länge des Rohlings **13**. Der Tragkörper **10** überragt somit den Rohling **13** in sämtlichen Richtungen, so daß er diese gegen mechanische Beschädigungen schützt.

Die axiale Länge des Aufnahmezylinders **16** ist geringer als die Höhe des Umfangsflansches **15** und auch geringer als die axiale Länge des Rohlings **13**, so daß dieser zwar innerhalb der äußeren Abmessungen des Tragkörpers **10** zurückgesetzt ist, aber gegenüber den ihn unmittelbar aufnehmenden Teilen vorsteht und daher für die Bearbeitung gut zugänglich ist.

Der Umfangsflansch **15** trägt an mindestens einer Stelle einen Strichcode **20**, der unmittelbar oder auf einem aufgeklebten Streifen aufgedruckt oder auch in das Material des Tragkörpers **10** eingeformt sein kann. Der Strichcode **20** dient zur Identifizierung von Material, Abmessungen und/oder sonstigen Eigenschaften des in dem Tragkörper **10** enthaltenen Rohlings **13**.

Statt des Strichcodes **20** kann auch jeder andere maschinenlesbare Code vorgesehen werden. Alternativ kann der Code auch von einem an dem Tragkörper **10** angebrachten Transponder übermittelt werden.

Figur 3 veranschaulicht eine Möglichkeit, den Tragkörper **10** mit Rohling **13** gemäß Figur 1 und 2 im Zuge einer automatischen Bearbeitung einzusetzen. Dort sind mehrere Tragkörper **10** mit unbearbeiteten Rohlingen in ein Zuführmagazin **30** eingelegt. Das Magazin **30** ist mit einer (nicht gezeigten) Schrägfläche versehen, die mit dem abgeschrägten Eckbereich **11** der Tragkörper **10** zusammenarbeitet, um zu gewährleisten, daß diese in der richtigen Orientierung eingelegt werden. An dem in Figur 3 unteren Ende des Magazins **30** wird der jeweils vorderste Tragkörper **10** in die bei **31** angedeutete Bearbeitungsposition überführt. Nach der Bearbeitung wird der betreffende Tragkörper **10** mit dem bearbeiteten Rohling **13** in ein in Figur 3 rechts gezeigtes Abgabemagazin **32** überführt.

Im Zuge der Bearbeitung wird der an dem Tragkörper **10** vorhandene Strichcode **20** vom Bearbeitungswerkzeug verändert. Die Veränderung kann in einer Zerstörung des Codes oder eines Teils davon bestehen. Dadurch wird erreicht, daß der gleiche Rohling nicht zweimal bearbeitet und bereits benutzte Tragkörper nicht mit fremden Rohlingen bestückt und erneut einer Bearbeitung zugeführt werden können.

Anstelle einer Veränderung des Codes kann die Steuerung der Bearbeitungsmaschine mit einem Speicher ausgerüstet sein, der eine in dem Strichcode **20** enthaltene Identifikationsnummer speichert und bei jedem neu zugeführten Tragkörper **10** dessen Code mit dem Speicherinhalt vergleicht.

Mit Hilfe desselben Strichcodes **20** oder eines zusätzlich vorgesehenen (nicht gezeigten) Codes kann ferner eine Identifizierung des individuellen Bearbeitungsprogramms erfolgen, das an dem betreffenden Rohling **13** abgearbeitet werden soll. Dieses Programm kann die individuellen Bearbeitungsdaten erhalten, die anhand der oben erläuterten optischen oder mechanischen Abtastung gewonnen wurden. In einem solchen Fall können die verschiedenen Tragkörper **10** mit ihren Rohlingen **13** in beliebiger Reihenfolge in das Zuführmagazin **30** eingelegt werden, und die Bearbeitungsmaschine kann anhand des Codes das zugehörige Programm auswählen oder, falls dieses noch nicht geladen wurde, die Bearbeitung des betreffenden Rohlings zurückstellen.

## Patentansprüche

1. Vorrichtung zur Herstellung eines Zahnersatzteils mit einem Rohling (**13**) und einem Tragkörper (**10**), der eine den Rohling (**13**) haltende Innenseite und eine in ein Bearbeitungswerkzeug einsetzbare Außenseite aufweist, **dadurch gekennzeichnet, daß** der Tragkörper (**10**) so bemessen ist, daß ihn der Rohling (**13**) in keiner Richtung überragt.

2. Vorrichtung nach Anspruch 1, wobei der Tragkörper (**10**) im wesentlichen plattenförmig ist und zur Aufnahme des Rohlings (**13**) eine Öffnung (**12**) aufweist, deren Durchgangslänge nicht kleiner ist als die axiale Abmessung des Rohlings (**13**).

3. Vorrichtung nach Anspruch 2, wobei der Tragkörper (**10**) von mindestens einer Stirnseite her mit Ausnehmungen versehen ist, die einen Umfangsflansch (**15**) und einen die Öffnung (12) umgebenden Aufnahmezylinder (**16**) bilden.

4. Vorrichtung nach Anspruch 3, wobei die Ausnehmungen zwischen dem Umfangsflansch (**15**) und dem Aufnahmezylinder (**16**) verlaufende radiale Rippen (**17**) bilden.

5. Vorrichtung nach Anspruch 3 oder 4, wobei der Umfangsflansch (**15**) die größte Höhe hat und der Aufnahmezylinder (**16**) in beiden Axialrichtungen gegenüber der Höhe des Umfangsflansches (**15**) zurückgesetzt ist.

6. Vorrichtung nach einem der vorhergehenden Ansprüche, wobei der Tragkörper (**10**) einen auf den Rohling (**13**), vorzugsweise auf dessen Abmessungen und/oder dessen Material, bezogenen Code (**20**) trägt.

7. Vorrichtung nach Anspruch 6, wobei der Code (**20**) von dem Bearbeitungswerkzeug veränderbar ist.

8. Vorrichtung nach einem der vorhergehenden Ansprüche, wobei der Tragkörper (**10**) eine nicht-symmetrische äußere Form hat.

9. Vorrichtung nach einem der vorhergehenden Ansprüche, wobei der Tragkörper (**10**) ein Kunststoff-Spritzteil ist.

## Claims

1. Device for producing a dental replacement part, with a blank (13) and a support body (10), the support body (10) having an inner side which holds the blank (13) and an outer side which can be fitted into a machining tool, **characterized in that** the support body (10) is dimensioned so that the blank (13) does not extend beyond it in any direction.

2. Device according to Claim 1, in which the support body (10) is substantially plate-shaped and, in order to receive the blank (13), has an opening (12) whose through-length is not smaller than the axial dimension of the blank (13).

3. Device according to Claim 2, in which the support body (10) is provided with recesses extending from at least one end face, which recesses form a peripheral flange (15) and a receiving cylinder (16) surrounding the opening (12).

4. Device according to Claim 3, in which the recesses form ribs (17) extending radially between the peripheral flange (15) and the receiving cylinder (16).

5. Device according to Claim 3 or 4, in which the peripheral flange (15) has the greatest height, and the receiving cylinder (16) is set back in both axial directions with respect to the height of the peripheral flange (15).

6. Device according to one of the preceding claims, in which the support body (10) has a code (20) referring to the blank (13), preferably to the latter's dimensions and/or its material.

7. Device according to Claim 6, in which the code (20) can be changed from the machining tool.

8. Device according to one of the preceding claims, in which the support body (10) has a non-symmetrical outer shape.

9. Device according to one of the preceding claims, in which the support body (10) is a plastic injection-moulded part.

## Revendications

1. Dispositif pour fabriquer une prothèse dentaire qui présente une ébauche (13) et un corps de support (10), qui présente un côté intérieur qui maintient l'ébauche (13) et un côté extérieur qui peut être inséré dans un outil de façonnage, **caractérisé en ce que** le corps de support (10) est dimensionné de telle façon que l'ébauche (13) n'en déborde dans aucune direction.

2. Dispositif selon la revendication 1, dont le corps de support (10) est essentiellement en forme de plaque et présente, pour recevoir l'ébauche (13), une ouverture (12) dont la longueur de passage n'est pas inférieure à la dimension axiale de l'ébauche (13).

3. Dispositif selon la revendication 2, dont le corps de base (10) est muni sur au moins un côté frontal de découpes qui forment un collet périphérique (15) et un cylindre de réception (16) qui entoure l'ouverture (12).

4. Dispositif selon la revendication 3, dont les découpes situées entre le collet périphérique (15) et le cylindre de réception (16) forment des nervures (17) qui s'étendent radialement.

5. Dispositif selon la revendication 3 ou 4, dont le collet périphérique (15) présente la hauteur la plus grande et dont le cylindre de réception (16) est en retrait dans les deux directions axiales par rapport à la hauteur du collet périphérique (15).

6. Dispositif selon l'une quelconque des revendications précédentes, dont le corps de base (10) est muni d'un code (20) associé à l'ébauche (13) et de préférence à ses dimensions et/ou à son matériau.

7. Dispositif selon la revendication 6, dont le code (20) peut être modifié par un outil de façonnage.

8. Dispositif selon l'une quelconque des revendications précédentes, dont le corps de support (10) présente une forme extérieure asymétrique.

9. Dispositif selon l'une quelconque des revendications précédentes, dont le corps de support (10) est une pièce en matière synthétique moulée par injection.
